## Europäisches Patentamt

## European Patent Office

## Office européen des brevets

(11) Veröffentlichungsnummer: **0 222 127**
**B1**

(12) **EUROPÄISCHE PATENTSCHRIFT**

(45) Veröffentlichungstag der Patentschrift:
**05.12.90**

(51) Int. Cl.⁵: **C08F 285/00**
// (C08F285/00, 214:06)

(21) Anmeldenummer: **86113397.3**

(22) Anmeldetag: **29.09.86**

(54) Verfahren zur Herstellung von thermoplastischen Massen.

(30) Priorität: **07.11.85 DE 3539414**

(43) Veröffentlichungstag der Anmeldung:
**20.05.87 Patentblatt 87/21**

(45) Bekanntmachung des Hinweises auf die Patenterteilung:
**05.12.90 Patentblatt 90/49**

(84) Benannte Vertragsstaaten:
**BE CH DE FR GB IT LI NL SE**

(56) Entgegenhaltungen:
**FR-A- 2 080 536**
**FR-A- 2 137 749**
**FR-A- 2 151 639**
**FR-A- 2 295 987**

**Die Akte enthält technische Angaben, die nach dem Eingang der Anmeldung eingereicht wurden und die nicht in dieser Patentschrift enthalten sind.**

(73) Patentinhaber: **HÜLS AKTIENGESELLSCHAFT, Patentabteilung / PB 15 - Postfach 13 20, D-4370 Marl 1(DE)**

(72) Erfinder: **Sturm, Harald, Dr., Wilhelm-Busch-Weg 3, D-4270 Dorsten 11(DE)**
Erfinder: **Terwonne, Rolf-Walter, Dormagener Strasse 17, D-4370 Marl(DE)**
Erfinder: **Thunig, Walter, Dr., Hammerstrasse 1, D-4370 Marl(DE)**

ACTORUM AG

EP 0 222 127 B1

## Beschreibung

Die Erfindung betrifft die Herstellung thermoplastischer Massen auf der Basis von Vinylchloridpolymerisaten und Polymeren zur Schlagzähmodifizierung, die neben einer hohen Schlagzähigkeit und gutem Oberflächenglanz hohe Transparenz und Witterungsbeständigkeit aufweisen.

Polyvinylchlorid (PVC) ist ein wegen seiner guten Eigenschaften und seines günstigen Preises häufig verwendeter Kunststoff. Wird PVC allein verwendet, weist es wohl eine hohe Transparenz, aber eine nicht ausreichende Schlagzähigkeit auf. Um die Schlagzähigkeit zu verbessern, wurden Vinylchloridpolymerisate mit den verschiedensten Modifizierungsmitteln versehen. Beispielhaft seien polymere Modifizierungsmittel vom Butadientyp, wie Acrylnitril-Butadien-Styrol (ABS) und Methacrylsäuremethylester-Butadien-Styrol (MBS); Copolymere des Ethylens mit Vinylacetat (EVA); chlorierte Polyolefine wie chloriertes Polyethylen (CPE); Ethylen-Propylen-Kautschuke und Polymere von Acrylattyp, wie Homo- und Copolymere von Acrylsäurealkylestern genannt. Es ist aber zu beachten, daß diese Modifizierungsmitel zwar die Schlagzähigkeit erhöhen, je nach Typ aber andere gute Eigenschaften des PVC's wie z. B. Transparenz oder Witterungsstabilität stark verschlechtern.

Es hat daher nicht an Bemühungen gefehlt, die Schlagzähigkeit von Polyvinylchlorid zu erhöhen, ohne die anderen Eigenschaften zu verschlechtern.

So ist in der US-PS 3 763 279 (DE-OS 22 22 867) die Herstellung von mehrschichtigen Polymeren, die einen harten Innenkern (z. B. vernetztes Polystyrol, Brechungsindex größer als von PVC) und eine kautschukelastische Außenschicht (z. B. ein vernetztes Acrylesterpolymeres; Brechungsindex kleiner als von PVC) haben, beschrieben. Die Zusammensetzung des Kern/Schale-Polymeren muß entsprechend den gewünschten Eigenschaften gewählt werden. Für eine hohe Transparenz soll der Styrolanteil ca. 55%, für eine gute Schlagzähigkeit unter 50% betragen. Die Herstellung erfolgt in zwei aufeinander folgenden Emulsionspolymerisationen. Hierauf erfolgt in einem dritten Schritt die Überpolymerisation mit Vinylchlorid in Emulsion oder Suspension. Die erhaltenen Formmassen weisen jedoch einen schlechten Oberflächenglanz und Trübungen auf.

Bei der Herstellung sind besondere Maßnahmen zu beachten. So wird die Notwendigkeit beschrieben, sowohl nach der Herstellung des Polystyrol-Saatlatex als auch nach der ersten Überpolymerisation mit Acrylsäureester eine Zerstörung der Katalysatorreste und eine Austreibung der nicht polymerisierten Monomeren vorzunehmen. Hierdurch soll die Bildung neuer Teilchen in der darauffolgenden Stufe vermieden werden, da diese die Transparenz negativ beeinflussen. Diese Zwischenschritte sind jedoch zeit- und energieaufwendig. Das nach der Überpolymerisation mit Vinylchlorid erhaltene Korn ist unporös. Um hierdurch bedingte Schwierigkeiten bei der Trocknung zu umgehen, wird empfohlen die Suspension mit einer modifizierungsmittelfreien PVC-Suspension zu vermischen und gemeinsam aufzuarbeiten. Aber nur durch eine hohe Porosität wird eine leichte Entgasbarkeit und damit eine wirtschaftlich günstige und physiologisch unbedenkliche Produktion, Weiterverarbeitung und Verwendung von Vinylchloridpolymerisaten gewährleistet (EP 0 033 893). Es kann auch bei niedrigeren Temperaturen entmonomerisiert werden, wodurch eine geringere thermische Schädigung des Vinylchloridpolymerisats eintritt.

In der DE-PS 2 557 828 wird die Herstellung eines Modifizierungsmittels in Pulverform für die Verwendung in schlagzähen und transparenten Formmassen auf Basis von Vinylchloridpolymerisaten beschrieben.

Hierzu wird in der ersten Stufe ein Gemisch eines aromatischen Vinylmonomeren mit einem Vernetzungsmittel, und auf dieses in einer zweiten Stufe ein Gemisch eines Acrylsäurealkylesters mit einem Vernetzungsmittel polymerisiert. In einer dritten Stufe wird dann Methylmethacrylat und ein aromatisches Vinylmonomer auf das in der zweiten Stufe erhaltene Polymere aufpolymerisiert. Alle Polymerisationsstufen werden in Emulsion durchgeführt. Das Mehrschichtpolymerisat wird durch Aussalzen koaguliert, gewaschen, getrocknet und vorzugsweise pulverisiert. Dieses pulverisierte Mehrschichtpolymerisat wird in Polyvinylchlorid unter evtl. Zugabe von üblichen Hilfsstoffen eingearbeitet.

In eben dieser Patentschrift wird an Hand von Beispielen gezeigt, daß ein direktes Aufpolymerisieren von Vinylchlorid auf das in der zweiten Stufe erhaltene Modifizierungsmittel zu Produkten mit deutlich schlechteren Eigenschaften führt.

Ein direktes Aufpfropfen ist aber wünschenswert, da hierdurch eine verbesserte Anbindung der Modifizierungsmittelteilchen an die PVC-Matrix erreicht wird.

Auch wird dann kein hartes Schalenmaterial in das Vinylchloridpolymerisat eingebracht, welches nicht zu einer Verbesserung der mechanischen Eigenschaften beiträgt. Zudem ist die Isolierung des Modifizierungsmittels mit zusätzlichem Arbeitsaufwand und einer Salzbelastung der Abwässer verbunden.

Ziel der Erfindung war es, ein Vinylchloridpolymerisat mit hoher Transparenz und Schlagzähigkeit und gutem Oberflächenglanz herzustellen, welches gegen Witterungseinflüsse beständig ist.

Es wurde nun ein Verfahren zur Herstellung von thermoplastischen Massen für Formkörper mit verbesserter Schlagfestigkeit, Transparenz, Oberflächenglanz und Witterungsbeständigkeit aus einem harten Innenkern aus vernetztem Polystyrol, einer kautschukelastischen Mittelschicht aus vernetzem Polyacrylat und einer Außenschicht aus Polyvinylchlorid gefunden, das dadurch gekennzeichnet ist, daß zu

2

I) 50 bis 2, vorzugsweise 45 bis 2 Gewichtsteilen eines Kern/Schale-Polymeren in Form eines Latex, hergestellt durch Polymerisation in Emulsion in Gegenwart wasserlöslicher oder öllöslicher Initiatoren, wobei

a) vor oder nach der Zugabe des Initiators bei Polymerisationsbedingungen in Gegenwart eines Emulgators 0,01 bis 5,0 Gew.-% eines Gemisches eines Acrylsäure- oder Methacrylsäurealkylesters mit einer vernetzenden Komponente vorgelegt und hiernach

b) 20 bis 70 Gew.% eines Gemisches eines aromatischen Vinylmonomeren mit einer vernetzenden Komponente und gleichzeitig hiermit in getrenntem Strom eine Lösung eines organischen Komplexbildners und eines Emulgators in Wasser und ggf. eine Lösung eines Katalysators portionsweise oder kontinuierlich zugegeben und aus-polymerisiert und auf dieses Polymere portionsweise oder kontinuierlich

c) 79,99 bis 25 Gew.% eines Gemisches eines Acrylsäurealkylesters mit einer vernetzenden Komponente und gleichzeitig hiermit eine wäßrige Emulgatorlösung unter Polymerisationsbedingungen zugegeben wird, so daß die Emulgator-Menge 0,20 bis 5,0 Gew.-Teile, bezogen auf die organische Phase, beträgt und im Verlauf der Polymerisation Teilchenneubildung wirksam unterdrückt wird.

II) 50 bis 98, vorzugsweise 55 bis 98 Gewichtsteile Vinylchlorid oder ein überwiegend Vinylchlorid enthaltendes Monomergemisch gegeben und bei einer Temperatur von 20 bis 50 °C 0,5 bis 2 Stunden in Gegenwart des Initiators gerührt wird, wobei Rührtemperatur und -zeit so zu wählen sind, daß der Umsatz, bezogen auf Vinylchlorid, höchstens 10 % beträgt, woraufhin man die Polymerisation durch weiteres Aufheizen auf eine Polymerisationstemperatur von 35-75°C bringt und bis zu einem Vinylchloridumsatz von 65 bis 95 %, vorzugsweise 75 bis 90 %, weiterpolymerisiert.

Das Polymere des in der 1. Stufe eingesetzten aromatischen Vinylmonomeren hat zweckmäßigerweise eine Glasübergangstemperatur von > 25, vorzugsweise > 40 °C, während das Polymere des in der 2. Stufe eingesetzten Acrylsäurealkylesters eine Glasübergangstemperatur von $\leq$-20 °C, besitzt. Als vernetzende Komponenten werden in 1. und 2. Polymerisationsstufe zweckmäßigerweise Verbindungen mit wenigstens 2 nicht konjungierten Doppelbindungen in Mengen von jeweils 0,1 bis 7,0 Gew.-%, vorzugsweise 0,2 bis 5,0 Gew.-%, bezogen auf zu vernetzendes Monomeres, eingesetzt.

Die 1. Stufe der Polymerisation erfolgt in wäßrigem Medium in Anwesenheit eines Emulgators oder eines Emulgatorgemisches. Bei Reaktionstemperatur wird zur Verbesserung der Teilchengrößeneinstellung, vor oder nach der Initiatorzugabe, in Ggw. eines Emulgators eine geringe Menge eines Methacrylsäure- oder Acrylsäureessters mit Vernetzungsmittel zugegeben. Hiernach erfolgt die Zugabe des den harten Kern bildenden aromatischen Vinyl-Monomeren und des Vernetzungsmittels. Gleichzeitig mit dem aromatischen Vinyl-Monomeren wird in einem getrennten Strom eine wäßrige Lösung des Emulgators und eines organischen Komplexbildners zugegeben. Diese Zugaben können kontinuierlich oder absatzeise erfolgen. Ebenso kann ein Teil bei Reaktionsbeginn und der verbleibende Rest im Verlauf der Polymerisation zugegeben werden. Durch die Zugabe des organischen Komplexbildners während der Polymerisation wird eine Verbesserung der Polymerisationsgeschwindigkeit, verbunden mit niedrigeren Restmonomergehalten und besserer Emulsionsstabilität erreicht. Das schalenbildende Acryl-Monomere wird im Gemisch mit dem Vernetzungsmittel nach dem Ende der ersten Stufe und evtl. einer Nachreaktionszeit von 15 bis 180 min. kontinuierlich oder absatzweise zugegeben. Gleichzeitig erfolgt die Zugabe einer Emulgatorlösung. Es werden wasserlösliche oder öllösliche Initiatoren verwendet, wobei wasserlösliche mit der Emulgatorlösung und öllösliche mit dem Monomeren zusammen zugegeben werden. In beiden Stufen ist die Zugabe und Menge der Monomeren, des Emulgators und des Initiators so vorzunehmen, daß Teilchenneubildung im Verlauf der Polymerisation wirksam unterdrückt wird. Die Oberflächenspannung sollte deshalb oberhalb derjenigen bei der kritischen Mizellen-Konzentration gehalten werden. Die Teilchenbildung soll nur in der Anfangsphase der Polymerisation erfolgen. Die Anwendung öllöslicher Initiatoren erweist sich dabei als günstiger.

Auf dieses Kern/Schale-Polymerisat wird in einer dritten Stufe Vinylchlorid aufpolymerisiert. Hierzu wird der Latex vorzugsweise in eine wäßrige Suspendiermittellösung gegeben, die den Initiator und, wenn erforderlich, Zusatzstoffe wie organische Komplexbildner, Puffer sowie ggf. weitere Polymerisationshilfsstoffe enthält. Nach Entfernung des Sauerstoffes wird Vinylchlorid aufgedrückt und auf Temperaturen zwischen 20 und 50 °C aufgeheizt. Bei dieser Temperatur wird 30 Minuten bis 2 Stunden gerührt, dabei soll der erfolgende Polymerisationsumsatz höchstens bis 10,0 Gew.-% betragen und nach Ablauf dieser Zeit wird auf die Polymerisationstemperatur von 35 °C bis 75 °C aufgeheizt. Höhere Umsätze als 10% führen im allgemeinen zu einer verschlechterten Aufschließbarkeit dieser Anteile welches durch Stippenbildung erkennbar wird. Rührzeiten von weniger als 30 min. führen zu einer schlechteren Reproduzierbarkeit der Suspensionspolymerisation, längere als 2 Strunden bringen keine Vorteile, sondern nur eine Verlängerung der Zycluszeit. Die Polymerisationstemperatur und damit Art und Menge des Initiators ist nach dem gewünschten K-Wert (nach Fikentscher, DIN 53 726) zu wählen.

Die Rührtemperatur und -zeit ist so zu wählen, daß die Hauptmenge an Monomeren erst bei der Polymerisationstemperatur umgesetzt wird. Das erhaltene Polymerisat wird durch übliche physikalische Methoden, wie z. B. Abschleudern oder Abnutschen, von der Hauptmenge Wasser befreit und z. B. im Wirbelbetttrockner getrocknet. Der mittlere Korndurchmesser liegt bei 80 bis 150 µm. Die Verarbeitung erfolgt nach den üblichen Verfahren wie z. B. auf Extrudern oder Spritzgußmaschinen, wobei gege-

EP 0 222 127 B1

benenfalls übliche Stabilisatoren, Weichmacher, Farbstoffe und Verarbeitungsmittel zugegeben werden.

Wählt man für die 3. Stufe ein Emulsionspolymerisationsverfahren, so werden Vinylchlorid und ggf. weiterer Emulgator und Initiator sowie weitere übliche Polymerisationshilfsstoffe zugegeben und im übrigen wird wie bereits beschrieben verfahren. Die Isolierung erfolgt dann z. B. durch Sprühtrocknung.

Als aromatische Vinylmonomere können z. B. Styrol, Vinyltoluol, Alpha-Methylstyrol, Chlorstyrol und Bromstyrol, d. h. solche, die Polymere mit einer Glastemperatur von $\leq$ 25 °C, vorzugsweise > 40 °C, (DIN 7742) und einem Brechungsindex größer als dem von Polyvinylchlorid bilden, verwendet werden. Als Acrylsäureester können solche mit 2 bis 10 Kohlenstoffatomen in der Alkylkette eingesetzt werden, deren Polymere eine Glastemperatur von < -20 °C und einen Brechungsindex kleiner als den von Polyvinylchlorid aufweisen, wie z. B. Ethylacrylat, n-Butylacrylat, i-Butylacrylat, n-Octylacrylat und 2-Ethylhexylacrylat. Besonders bevorzugt sind solche mit 4 bis 8 Kohlenstoffatomen, wie z. B. n-Butylacrylat, i-Butylacrylat, n-Octylacrylat und 2-Ethylhexylacrylat.

Als Methacrylsäurealkylester (in der Vorstufe) können solche mit 1 bis 18 Kohlenstoffatomen in der Alkylkette eingesetzt werden, wie z. B. Methylmethacrylat. Diese Monomeren können sowohl allein als auch im Gemisch zur Anwendung gelangen.

Außerdem können bis zu 20 Gew.-% mit den obengenannten Verbindungen copolymerisierbare Monomere, wie z. B. Vinylester, Vinylether, Acryl- oder Methacrylnitril, Alkylester der Maleinsäure, Fumarsäure oder Itakonsäure und Olefine eingesetzt werden.

Der Brechungsindex des Kern/Schale-Polymeren sollte gleich dem des Polyvinylchlorids sein.

Als Vernetzungsmittel können in der 1. und 2. Stufe solche Verbindungen eingesetzt werden, die mit den jeweiligen Monomeren copolymerisierbar sind und mindestens zwei nichtkonjugierte Doppelbindungen enthalten, wie z. B. Divinylbenzol, (Meth)acrylsäurevinylester, (Meth)acrylsäureallylester, die Diallylester der Phthalsäure, Maleinsäure, Triallylcyanurat, die (Meth)acrylate mehrwertiger Alkohole wie z. B. von Pentacrythrit, Trimethylolpropan, Butandiol, Ethandiol und Glycerin, Triacrylamid oder Trimethacrylamid..

Die Vernetzungsmittel sollten in beiden Stufen der Emulsionspolymerisation in Mengen von jeweils 0,1 bis 7,0 Gew.-%, vorzugsweise 0,2 bis 5.0 Gew.-%, bezogen auf das zu vernetzende Monomere eingesetzt werden. Die hervorragenden mechanischen Eigenschaften der erfindungsgemäßen Formmassen werden dann erreicht, wenn sowohl der Kern als auch die Schale des Emulsionspolymerisats vernetzt sind.

Als Emulgatoren in beiden Stufen der Herstellung des Kern/Schale-Polymeren sowie ggf. in der 3. Stufe (Vinylchlorid-Polymerisation) können übliche oberflächenaktive Stoffe eingesetzt werden. Als günstig haben sich übliche anionische Emulgatoren wie z. B. Natriumlaurat, Natriumlaurylsulfonat, Natriumlaurylsulfat, Natriumalkylbenzolsulfonate etc. herausgestellt. Sie werden je nach Art und gewünschter Teilchengröße in Mengen von 0,20 Gew.-Teilen bis 5,0 Gew.-Teilen, bezogen auf die organische Phase zugesetzt. Bevorzugt sind in den ersten beiden Stufen solche Mengen, bei denen Kern/Schale-Polymerisate mit einem mittleren Durchmesser von 50 nm bis 500 nm erhalten werden, d. h. also Mengen von 0,30 bis 2,5 Gew.-%, bezogen auf die organische Phase. In diesem Bereich erhält man eine hervorragende Transparenz und Schlagzähigkeit auch bei niedrigen Modifizierungsmittelmengen. Zusätzlich können noch nichtionogene Tenside wie z. B. Fettalkoholethoxylate, Fettsäureester von Polyethylenoxiden, Fettsäureester von Polyolen in Mengen von 0,05 bis 1,5 Gew.-Teilen, bezogen auf das Gewicht der eingesetzten Monomeren, zugegeben werden.

Als organische Komplexbildner, die in der 1. Stufe eingesetzt werden, kommen infrage: Alkali- und Ammoniumsalze der Ethylendiamintetraessigsäure oder Nitrilotriessigsäure. Weiter können 1,2- und 1,3-Propylendiamintetraessigsäure, Diethylentriaminpentaessigsäure und deren Derivate in Form der freien Säuren oder Salze, wie z. B. N-Oxethylethylendiamin-triessigsaures Natrium, N-Isopropanolethylendiamin-triessigsaures Natrium, N-Oxethyldiethylentriamin-tetraessigsaures Natrium oder o-Diamino-cyclohexan-tetraessigsaures Natrium verwendet werden.

Als Initiatoren bei der Emulsionspolymerisation können z.B. wasserlösliche Verbindungen des Peroxidtyps wie z.B. Kalium-, Natrium-, Ammoniumpersulfat, tert-Butylhydroperoxid und Wasserstoffperoxid eingesetzt werden. Diese Initiatoren können allein oder im Gemisch in Mengen von 0,01 bis 1,0 Gew.-% (bezogen auf die Gesamtmenge organische Phase), gegebenenfalls in Anwesenheit von 0,01 bis 1,0 Gew.-% einer oder mehrere reduzierend wirkender, zur Bildung von Redox-Katalysatorsystemen befähigter Substanzen wie z.B. Aldehydsulfoxylate, Hyposulfite, Pyrosulfite, Sulfite und Thiosulfate eingesetzt werden.

Bei der Emulsionspolymerisation (in 1., 2. und ggf. 3. Stufe) können aber auch öllösliche Initiatoren wie z.B. Azobis(isobutyronitril) zur Anwendung gelangen. Diese Initiatoren haben den großen Vorteil, weniger Teilchenneubildung im Verlauf der Polymerisation zu verursachen als wasserlösliche Initiatoren wie z.B. Persulfate. Die Polymerisation wird i.a. bei Temperaturen zwischen 40°C und 90°C, bei Redox-Katalysatorsystemen auch bei tieferen Temperaturen, durchgeführt.

Die Aufpolymerisation von Vinylchlorid auf das Kern/Schale-Polymere (3. Stufe) erfolgt vorzugsweise in Suspension, ggf. aber auch in Emulsion. Es können dem Vinylchlorid bis zu 20 Gew.-% copolymerisierbare Monomere wie z.B. Vinylether, Vinylester wie Vinylacetat, -propionat, -butyrat, Vinylhalogeni-

4

de wie Vinylfluorid, Vinylidenchlorid, ungesättigte Säuren und deren Anhydride wie Malein-, Fumar-, Acrylsäure, deren Mono- und Diester, sowie Maleinsäureanhydrid, zugemischt werden.

Als Suspensionsmittel können primäre Schutzkolloide in Mengen von 0,05 Gew.-% bis 1,0 Gew.-% (bezogen auf die Gesamtmenge der organischen Phase) zugegeben werden. Es sind beispielhaft zu nennen die weitgehend wasserlöslichen Cellulosederivate mit Viskositäten der 2%igen wäßrigen Lösung von 25 bis 3000 mPa•s wie Alkyl-, Hydroxyalkyl, Alkylhydroxyalkyl- und Carboxyalkylcellulosen, Polyvinylalkohole, teilverseifte wasserlösliche Polyvinylacetate, Mischpolymerisate aus Vinylpyrrolidon und ethylenisch ungesättigten Estern und Polyoxazoline.

Zusätzlich können nichtionische Tenside wie z. B. Fettsäureethoxylate, Fettsäureester von Polyolen und Alkoholethoxylate in Mengen von 0,01 bis 1,2 Gew.-Teilen bozogen auf die Gesamtmenge der organischen Phase als Supensionshilfsstoffe zugegeben werden.

Die Suspensions-Polymerisation wird durch monomerlösliche Radikalinitiatoren, z. B. des Peroxidtyps oder Azoverbindungen, eingeleitet. Beispielhaft für peroxidische Initiatoren seien Diacyl-, Dialkylperoxide, Peroxydicarbonate, Alkylperester wie Bis(2-methylbenzoyl)peroxid, Di-tert.-butylperoxid, Dilauroylperoxid, Acetylbenzoylperoxid, Dicumylperoxid, Dicetylperoxidicarbonat und tert.-Butylperpivalat sowie für Azoinitiatoren Azobis(isobutyronitril) genannt. Die Wahl der Art und Menge des Initiators erfolgt in üblicher Weise, wobei auch Initiatorgemische verwendet werden können.

Als Zusatzstoffe können zur Suspensionspolymerisation noch Puffer und/oder ein organischer Komplexbildner wie z. B. Ethylendiamintetraessigsäure sowie deren Salze, Nitrilotriessigsäure und deren Salze in Mengen von 0,01 bis zu je 0,5 Gew.-Teilen bezogen auf die organische Phase zugegeben werden. Hierdurch wird bei gleichbleibender Weichmacheraufnahme (DIN 53 417) und gleichbleibendem mittleren Korndurchmesser die Schüttdichte (DIN 53 468) und die Reproduzierbarkeit (z. B. Korngrößenverteilung nach DIN 53 734) verbessert.

Die Erfindung wird im folgenden an Hand von Beispielen erläutert. Teile und Prozentangaben beziehen sich, wenn nicht anders vermerkt, auf das Gewicht. Teile sind immer auf die Menge der gesamten organischen Phase bezogen.

## Beispiel 1

### (A) Herstellung eines erfindungsgemäßen Latex

Zu 100 Teilen VE-Wasser werden 0,85 Teile Natriumlaurat als Emulgator gegeben. Die Mischung wird auf 80 °C aufgeheizt und, wenn eine klare Lösung vorhanden ist, mit 0,5 Teilen einer n-Butylacrylat/Diallylphthalat-Mischung (99:1) versetzt. Nach 10 min werden 0,20 Teile Ammoniumpersulfat zugegeben und nach weiteren 10 min mit der Dosierung von 57,0 Teilen eines Styrol/Divinylbenzolgemisches (99:1) und 115 Teilen einer Emulgator/Ethylendiamintetraessigsäuretetranatriumsalz-Lösung begonnen. Die Emulgator/EDTA-Lösung besteht aus 0,425 Teilen Natriumlaurat, 1,0 Teilen EDTA und 113,575 Teilen VE-Wasser. Die Dosierung wird über 2 Stunden fortgeführt; nach einer Nachreaktionszeit von 30 min beträgt der Reststyrolgehalt 0,2 % (Umsatz > 99 Gew.-%). Dann werden bei ebenfalls 80 °C 42,5 Teile einer Butylacrylat/Diallylphthalatmischung (99:1) und 85 Teile einer Mischung aus 0,293 Teilen Natriumlaurat und 0,130 Teilen Ammoniumpersulfat in 84,577 Teilen VE-Wasser innerhalb von 3 Stunden dosiert. Es wird noch eine Stunde nachreagieren gelassen. Der mittlere Teilchendurchmesser beträgt 95 nm. Der Restmonomergehalt wurde zu 0,1 Gew.-% (Umsatz > 99 Gew.-%) bestimmt.

### (B) Vinylchloridpfropfpolymerisation auf den Latex (A)

Zu einer Lösung von 0,20 Teilen einer Methylhydroxypropylcellulose (Viskosität der 2 %igen wäßrigen Lösung = 50 mPa•s) in 120 Teilen VE-Wasser gibt man 0,08 Teile Azobis(isobutyronitril), 0,06 Teile EDTA, 40 Teile Latex (A) (entsprechend 10 Teilen Feststoff) und nach mehrmaligem Evakuieren und Spülen mit Stickstoff 90 Teile VC.

Es wird auf 40 °C aufgeheizt, eine Stunde gerührt, auf die Reaktionstemperatur von 60 °C aufgeheizt und bis zu einem Druck von 3 bar reagieren lassen. An Hand der Differenztemperatur zwischen Polymerisationsmedium und Mantel wurde bei der Rührphase ein VC-Umsatz von ca. 4 % ermittelt. Das Polymerisat wird durch Entspannen vom Restmonomeren befreit, abgenutscht und im Wirbelbetttrockner getrocknet. Es wird ein Suspensionspolymerisat mit einer mittleren Teilchengröße von 90 μm, einem Schüttgewicht von 590 g/l und einer Weichmacheraufnahme (DIN 53 417) von 7,9 g DOP/100 g PVC erhalten.

## Beispiel 2

Wie in Beispiel 1 (A) beschrieben wird ein Latex hergestellt, mit der Ausnahme, daß an Stelle von Ammoniumpersulfat Azobis(isobutyronitril) (AIBN) als Initator eingesetzt wird. In der ersten Stufe (Herstellung des Kerns) wird AIBN (0,20 Teile) mit der wäßrigen Emulgatorlösung vorgelegt und in der zweiten Stufe (Aufpolymerisierung der Schale) im Butylacrylat gelöst (0,13 Teile AIBN). Die Suspensionspolymerisation wird wie in 1 (B) durchgeführt. Est wird ein Vinylchloridpolymerisat mit einem Schüttgewicht von 620 g/l und einer Weichmacheraufnahme von 6,3 g DOP/100 g PVC erhalten.

Beispiel 3

Es wird verfahren wie in Beispiel 1, mit der Ausnahme, daß bei der Emulsionspolymerisation AIBN (wie in Beispiel 2 beschrieben), als Initiator verwendet wird. Bei der Suspensionspolymerisation werden 32 Teil Latex (entsprechend 8 Teilen Feststoff) und 92 Teile Vinylchlorid eingesetzt.

Vergleichsbeispiel I

Es wird verfahren wie in Beispiel 1 beschrieben, mit der Ausnahme, daß in Stufe SB nach dem Befüllen des Reaktors sofort auf Polymerisationstemperatur aufgeheizt wird. Es wird ein grobes Polymerisat erhalten, welches den Ausfahrstutzen des Polymerisationskessels verstopft.

Vergleichsbeispiel II (gemäß US-PS 3 763 279)

Es wird verfahren wie in der US-PS 3 763 279, Beispiel 2 beschrieben, mit der Ausnahme, daß ein Polystyrolanteil im Kern/Schale-Polymeren von 57 % vorliegt und bei der anschließenden VC-Überpolymerisation 10 Teile Latex (gerechnet als Feststoff) und 90 Teile VC mit den Polypersationshilfsstoffen in den Polymerisationskessel gegeben werden. Es wird ein Polymerisat mit einem mittleren Korndurchmesser von 200 µm und einer Weichmacheraufnahme von 0,4 g DOP/100 g PVC erhalten.

Vergleichsbeispiel III (ohne Komplexbildner – Dosierung)

Es wird wie in Beispiel 1 (A) verfahren, mit der Ausnahme, daß eine Emulgatorlösung ohne EDTA-Zusatz bei der Herstellung des Kerns nach und nach zudosiert und das EDTA vorgelegt wurde. Der Umsatz nach der ersten Stufe betrug nur 93% und nach der zweiten Stufe der Emulsionspolymerisation nur 95% bezogen auf das eingesetzte Monomere (Reststyrolgehalt < 0,05%) gegenüber 99% in beiden Stufen bei EDTA-Dosierung. Es wird ein Suspensionspolymerisat mit einem mittleren Korndurchmesser von 350 µm und einer Weichmacheraufnahme von 0,8 g DOP/100 g PVC erhalten.

Vergleichsbeispiel IV

Es wird ein Polybutylacrylatlatex hergestellt, auf den man Vinylchlorid aufpfropft. Die Größe der Polybutylacrylatpartikel beträgt 90 nm. Das Suspensionspolymerisat weist eine mittlere Korngröße von 110 µm auf.

Vergleichsbeispiel V

Dieses Polymerisat ist ein handelsübliches Masse-PVC der Hüls AG (VESTOLIT® M 6058).

Herstellung der Probekörper

Zu 100 Teilen des Vinylchloridpolymerisats werden 2,5 Teile eines handelsüblichen Zinnstabilisators, UV-Stabilisator und Gleitmittel gegeben und in einem Laborheißmischer bis auf 110°C aufgeheizt. Hiernach wird das Polymerisat auf einer Mischwalze bei 175°C zu Walzfellen und diese zu Preßplatten verarbeitet. Die Kerbschlagzähigkeit wird nach DIN 53 453 und die Transmission mit einem Spektralphotometer der Firma General Electric an 2 mm dicken Platten gegen $BaSO_4$ bestimmt.

# EP 0 222 127 B1

## Tabelle 1

| Versuch Beispiel | Kern/Schale-Polymer St % | BA % | VC-Propfpolymerisat Kautschukphase % | Kerbschlagzähigkeit kJ/m² | Transmission % bei nm 500 | 600 | 700 nm |
|---|---|---|---|---|---|---|---|
| 1 | 57 | 43 | 4,8 | 30 | 80 | 85 | 87 |
| 2 | 57 | 43 | 4,8 | 32 | 80 | 85 | 87 |
| 3 | 58 | 42 | 3,7 | 22 | 82 | 87 | 89 |
| I (Vergl.)* | 57 | 43 | | | | | |
| II (Vergl.)** | 57 | 43 | 4,8 | 8 | 67 | 70 | 78 |
| III   "   ** | 57 | 43 | 4,8 | 6 | 72 | 83 | 84 |
| IV   " | 0 | 100 | 6,5 | 40 | 18 | 33 | 43 |
| V   " | 0 | 0 | 0 | 2 | 82 | 87 | 89 |

\* Material schließt auf der Walze nicht auf.

\*\* Das Polymerisat nahm die Additive schlecht auf und plastifizierte langsam.

Aus Tabelle 1 ist ersichtlich, daß die erfindungsgemäßen Formmassen Eigenschaften aufweisen, die ein Optimum darstellen. Die Transmissionswerte sind wie die des Massepolyvinylchlorids, welches jedoch eine sehr niedrige Kerbschlagzähigkeit aufweist, und die Kerbschlagzähigkeiten sind annähernd so wie die des mit einem reinem Polybutylacrylat (Vergleichsbeispiel IV) modifizierten Polymerisats, welches dabei aber nicht transparent ist. Es ist zu beachten, daß bei den mit einem Kern/Schale-Polymeren modifizierten Produkten der Anteil der kautschukelastischen Phase weniger als 5,0 Gew.-%, aber im Vergleichsbeispiel IV 6,5 Gew.-% beträgt.

Das Vergleichsbeispiel I zeigt die Vorteilhaftigkeit einer Rührphase. Es gelingt nicht ein gut verarbeitbares Korn herzustellen. Hierunter leidet sowohl die Transparenz als auch die Kerbschlagzähigkeit des Systems. Gleiches gilt, wenn nach der US-PS 3 763 279 verfahren (Vergleichsbeispiel II) oder wenn EDTA nicht nach und nach zudosiert wird und die Umsätze in den beiden Stufen der Emulsionspolymerisation zu niedrig sind (Vergleichsbeispiel III). Sowohl bei den Transmissionswerten, als auch bei der Kerbschlagzähigkeit ist ein starker Abfall zu beobachten, der die Nutzungsmöglichkeiten stark einschränkt.

### Beispiel 4

Es wird verfahren wie in Beispiel 2, mit der Ausnahme, daß das Verhältnis Kern zu Schale 56 zu 44 ist. Bei der VC-Pfropfpolymerisation wird die Polymerisationstemperatur variiert. Die Polymerisate werden wie oben beschrieben verarbeitet.

## Tabelle 2

| Versuch | $T_{Pol}$ | Kerbschlag-<br>zähigkeit | Transmission<br>bei % nm | | |
|---------|-----------|--------------------------|------|-----|-----|
| Beispiel | °C | kJ/m² | 500 | 600 | 700 |
| 4 a | 67 | 31 | 78 | 84 | 86 |
| 4 b | 65 | 35 | 78 | 85 | 86 |
| 4 c | 63 | 38 | 78 | 85 | 87 |
| 4 d | 61 | 39 | 79 | 86 | 87 |
| 4 e | 59 | 41 | 78 | 85 | 86 |
| 4 f | 57 | 42 | 79 | 85 | 87 |

Mit steigender Polymerisationstemperatur bei der Pfropfpolymerisation des Vinylchlorids auf die Kern/Schale-Teilchen wird eine Erniedrigung der Kerbschlagzähigkeit beobachtet. Die Transmissionswerte bleiben innerhalb üblicher Grenzen konstant.

### Beispiel 5

Es wird wie in Beispiel 2 verfahren, mit der Ausnahme, daß das Verhältnis von Polystyrolkern zu Polybutylacrylatschale verändert wird. Die Verarbeitung der Vinylchloridpolymerisate erfolgt wie oben beschrieben.

## Tabelle 3

| Versuch | Kern/Schale-<br>Polymer | | VC-Pfropfpolymerisat | | | |
|---------|------|------|-----------------------|------|-----|-----|
| Beispiel | St | BA | Kerbschlag-<br>zähigkeit | Transmission<br>% bei nm | | |
| | % | % | kJ/m² | 500 | 600 | 700 |
| 5 a | 56 | 44 | 34 | 79 | 85 | 86 |
| 5 b | 59 | 41 | 37 | 81 | 87 | 88 |
| 5 c | 62 | 38 | 34 | 79 | 87 | 89 |
| 5 d | 65 | 35 | 37 | 74 | 86 | 89 |
| V (Vergleich) | 0 | 0 | 2 | 82 | 87 | 89 |

Es ist ersichtlich, daß die Formmassen bei einem Styrolanteil von 59 % die vorteilhaftesten Eigenschaften besitzen. Neben einer sehr hohen Lichtdurchlässigkeit wird auch aine unerwartet hohe Kerbschlagzähigkeit gefunden. Es sind nur ca. 4,5 % Kautschukphase vorhanden. Für das Erreichen derart hoher Kerbschlagzähigkeit sind sonst ca. 6 bis 7 Teile eines vernetzten Polyacrylsäurealkylesters, wie z. B. Polybutylacrylat, erforderlich. Es liegt somit bei den erfindungsgemäßen Massen eine stark verbesserte Kautschukausnutzung vor.

### Beispiel 6

Es wurde wie in Beispiel 5 verfahren, mit der Ausnahme, daß 32 Teile Latex (entsprechend 8 Teilen Modifizierungsmittel) und 92 Teile Vinylchlorid eingesetzt werden.

Tabelle 4

| Versuch | Kern/Schale-Polymer | | VC-Pfropfpolymerisat | | | |
|---------|------|------|------------------|------|------|------|
| Beispiel | St | BA | Kerbschlag-zähigkeit | Transmission % bei nm | | |
| | % | % | kJ/m² | 500 | 600 | 700 |
| 6 a | 56 | 44 | 20 | 81,0 | 82,5 | 87,0 |
| 6 b | 57 | 43 | 19 | 81,5 | 86,0 | 87,5 |
| 6 c | 58 | 42 | 22 | 82,0 | 87,0 | 88,5 |
| 6 d | 59 | 41 | 27 | 82,0 | 87,5 | 89,0 |
| 6 e | 60 | 40 | 24 | 81,0 | 86,5 | 88,5 |
| 6 f | 61 | 39 | 18 | 81,0 | 86,5 | 89,0 |
| 6 g | 62 | 38 | 16 | 81,5 | 87,0 | 88,0 |
| V (Vergleich) | 0 | 0 | 2 | 82,0 | 87,0 | 89,0 |

Im Vergleich zur O-Probe (M-PVC) ist ersichtlich, daß bei einem Styrolanteil im Kern/Schale-Polymeren von 59 % die Lichtdurchlässigkeit den höchstmöglichen Wert, nämlich den des reinen Massepolyvinylchlorids, erreicht. Die Formmassen weisen dabei eine überraschend hohe Schlagzähigkeit auf. Es war nicht zu erwarten, eine Formmasse auf Basis von Vinylchloridpolymerisat zu erhalten, die ein derartig hervorragendes Eigenschaftsbild besitzt.

Beispiel 7

Die Formmasse aus Beispiel 2 wird auf einem Extruder mit einer Schlitzdüse zu Platten mit einer Dicke von 4,0 mm verarbeitet. Die Massetemperatur wird zwischen 180 °C und 195 °C variert. Aus den Werkstücken werden Prüfkörper für die Bestimmung der Kerbschlagzähigkeit gefertigt. Für die Bestimmung der Transmissionswerte werden 2 mm starke Preßplatten gefertigt.

Vergleichsbeispiel VI

Es wird ein handelsübliches, mit chloriertem Polyethylen modifiziertes PVC eingesetzt und wie in Beispiel 7 beschrieben verarbeitet.

Vergleichsbeispiel VII

Es wird ein handelsübliches Masse-Vinylchloridpolymerisat eingesetzt (VESTOLIT[R] M 6058 der Hüls AG) und wie in Beispiel 7 beschrieben verarbeitet.

Vergleichsbeispiel VIII

Es wird ein Polymerisat, welches nach der Lehre der DE-PS 25 57 828 erhalten wird, eingesetzt und wie in Beispiel 7 beschrieben verarbeitet.

Vergleichsbeispiel IX

6 Teile eines handelsüblichen Schlagzähmodifizierungsmittels auf Basis Methacrylsäuremethylester-Butadien-Styrol und 94 Teile M-PVC werden wie oben beschrieben mit den üblichen Zusatzstoffen versetzt und gemischt. Die Verarbeitung erfolgt wie unter Beispiel 7 beschrieben.

Tabelle 5

| Versuch | Kern/Schale-Polymer | | Massetemperatur °C (Extruder) | Kerbschlagzähigkeit | Oberfl. [1] | Transmission % bei | | | |
|---------|-----|-----|-----|-----|-----|-----|-----|-----|-----|
| | St | BA | | | | | | | |
| Beispiel | % | % | | kJ/m² | | 500 | 600 | 700 | nm |
| 7 a | 57 | 43 | 180 | 38 | 1-2 | 80 | 87 | 88 | |
| 7 b | | | 185 | 35 | 1 | 81 | 87 | 88 | |
| 7 c | | | 190 | 34 | 1 | 81 | 87 | 88 | |
| 7 d | | | 195 | 41 | 1 | 81 | 87 | 88 | |
| VI (Vergleich) | CPE-modif. | | | | | | | | |
| a | | | 180 | 8 | 1-2 | 70 | 77 | 81 | |
| b | | | 190 | 9 | 1-2 | 72 | 78 | 82 | |
| c | | | 195 | 8 | 1-2 | 72 | 78 | 82 | |
| VII (Vergleich) | | | | | | | | | |
| a | M-PVC | | 180 | 2,5 | 1-2 | 82 | 87 | 89 | |
| b | | | 190 | 2,9 | 1 | 82 | 87 | 89 | |
| c | | | 195 | 2,8 | 1 | 82 | 87 | 89 | |

EP 0 222 127 B1

Tabelle 5 (Fortsetzung)

| Versuch | Kern/Schale-Polymer | | Massetempe-ratur °C (Extruder) | Kerb-schlag-zähigkeit | Oberfl. [1] | Transmission % bei | | |
|---|---|---|---|---|---|---|---|---|
| Beispiel | St % | BA % | | kJ/m² | | 500 | 600 | 700 nm |
| VIII (Vergleich) | | | | | | | | |
| a | 33,25 | 36,75 [2] | 180 | 13 | 1-2 | 72 | 79 | 82 |
| b | | | 190 | 14 | 1-2 | 73 | 79 | 83 |
| c | | | 195 | 14 | 1-2 | 73 | 79 | 82 |
| IX (Vergleich) | MBS-mod. | | | | | | | |
| a | | | 180 | 10 | 1-2 | 60 | 67 | 71 |
| b | | | 188 | 13 | 1-2 | 60 | 67 | 70 |
| c | | | 195 | 11 | 1-2 | 60 | 67 | 70 |

[1] 1: glänzend, 2: glänzend mit matten Streifen, 3: matt

[2] Auf diese 70 Teile des Kern/Schale-Polymerisats werden in einer zweiten Überpolymerisation erst 15 Teile MMA und dann 15 Teile Styrol polymerisiert. Das erhaltene Modifizierungsmittel wird wie in der DE-AS 25 57 828 beschrieben hergestellt und eingearbeitet.

EP 0 222 127 B1

Aus Tabelle 5 wird deutlich, daß nur mit den erfindungsgemäßen Vinylchloridpolymerisaten Formassen hergestellt werden können, die neben einer hohen Transmission einen hervorragenden Oberflächenglanz und unerwartet hohe Kerbschlagzähigkeiten aufweisen. Mit CPE-modifiziertem Polyvinylchlorid sind die Oberflächen der Formmassen etwas schlechter als die der erfindungsgemaßen, aber sowohl die Kerbschlagzähigkeit als vor allem die Transparenz sind deutlich schlechter. Gleiches gilt für Formmassen auf der Basis eines Vinylchloridpolymerisats und eines Modifizierungsmittels, welches nach der Lehre der DE-PS 25 57 828 hergestellt wird oder eines Modifizierungsmittels auf MBS-Basis. Die Formmassen nach Vergleichsbeispiel VI und VIII weisen zudem eine deutliche Trübung und die des Vergleichsbeispiels IX eine etwa geringere Trübung auf.

Die erfindungsgemäß erhaltenen thermoplastischen Massen lassen sich beispielsweise zur Herstellung von Gewächshäusern einsetzen.

## Patentansprüche

1. Verfahren zur Herstellung von thermoplastischen Massen für Formkörper mit verbesserter Schlagfestigkeit, Transparenz, Oberflächenglanz und Witterungsbeständigkeit, aus einem harten Innenkern aus vernetztem Polystyrol, einer kautschukelastischen Mittelschicht aus vernetztem Polyacrylester und einer Außenschicht aus Polyvinylchlorid, dadurch gekennzeichnet, daß zu

I) 50 bis 2 Gewichtsteilen eines Kern/Schale-Polymeren in Form eines Latex, hergestellt durch Polymerisation in Emulsion in Gegenwart wasserlöslicher oder öllöslicher Initiatoren, wobei

a) vor oder nach der Zugabe des Initiators bei Polymerisationsbedingungen in Ggw. eines Emulgators 0,01 bis 5,0 Gew.-% eines Gemisches eines Acrylsäure- oder Methacrylsäurealkylesters mit einer vernetzenden Komponente vorgelegt und hiernach

b) 20 bis 70 Gew.-% eines Gemisches eines aromatischen Vinylmonomeren mit einer vernetzenden Komponente und gleichzeitig hiermit in getrenntem Strom eine Lösung eines organischen Komplexbildners und eines Emulgators in Wasser und ggf. eine Lösung eines Katalysators portionsweise oder kontinuierlich zugegeben und auspolymerisiert und zu diesem Polymeren portionsweise oder kontinuierlich

c) 79,99 bis 25 Gew.-% eines Gemisches eines Acrylsäurealkylesters mit einer vernetzenden Komponente und gleichzeitig hiermit eine wäßrige Emulgatorlösung unter Polymerisationsbedingungen zugegeben wird, so daß die Emulgator-Menge 0,20 bis 5,0 Gew.-Teile, bezogen auf die organische Phase, beträgt und im Verlauf der Polymerisation Teilchenneubildung wirksam unterdrückt wird,

II) 50 bis 98 Gewichtsteile Vinylchlorid oder ein überwiegend Vinylchlorid enthaltendes Monomergemisch gegeben und bei einer Temperatur von 20 bis 50°C 0,5 bis 2 Stunden in Gegenwart des Initiators gerührt wird, wobei Rührtemperatur und -zeit so zu wählen sind, daß der Umsatz, bezogen auf das Monomerengemisch, bzw. Vinylchlorid, höchstens 10 Gew.-% beträgt, woraufhin man die Polymerisation durch weiteres Aufheizen auf eine Polymerisationstemperatur von 35 bis 75°C bringt und bis zu einem Vinylchloridumsatz von 65 bis 95% weiterpolymerisiert.

2. Thermoplastische Masse nach Anspruch 1, dadurch gekennzeichnet, daß das Polymere des aromatischen Vinylmonomeren eine Glasübergangstemperatur von > 25°C und das Polymere des Acrylsäurealkylesters der Schale eine Glasübergangstemperatur von < −20°C besitzt.

3. Thermoplastische Masse nach Anspruch 1, dadurch gekennzeichnet, daß als vernetzende Komponenten Verbindungen mit mindestens 2 nicht konjugierten Doppelbindungen in Mengen von jeweils 0,1 bis 7 Gew.-%, bezogen auf das zu vernetzende Monomere zugegeben werden.

## Claims

1. A process for the preparation of thermoplastic materials for mouldings having improved impact resistance, transparency, surface gloss and weathering resistance and composed of a hard inner core made of crosslinked polystyrene, a rubber-elastic middle layer made of crosslinked polyacrylic ester and an outer layer made of polyvinyl chloride, characterized in that there is added to

I) 50 to 2 parts by weight of a core/shell polyver in the form of a latex, prepared by emulsion polymerization in the presence of water-soluble or oilsoluble initiators, in which

a) before or after the addition of the initiator 0.01 to 5.0 % by weight of a mixture of an alkyl acrylate or methacrylate containing a crosslinking component is initially introduced under polymerization conditions in the presence of an emulsifier and then

b) 20 to 70 % by weight of a mixture of an aromatic vinyl monomer containing a cross-linking component and simultaneously in a separate stream a solution of an organic complexing agent and an emulsifier in water and, if desired, a solution of a catalyst are added in portions or continuously and the polymerization is completed, and

c) 79.99 to 25 % by weight of a mixture of an alkyl acrylate containing a crosslinking component and simultaneously an aqueous emulsifier solution are added under polymerization conditions to this polymer in portions or continuously, so that the amount of emulsifier is 0.20 to 5.0 % by weight, relative to the organic phase, and the reformation of particles in the course of the polymerization is effectively suppressed.

II) 50 to 98 parts by weight of vinyl chloride or a mixture of monomers predominantly containing vinyl chloride, and the mixture is stirred at a temperature of 20 to 50°C for 0.5 to 2 hours in the presence of the initiator, the stirring temperature and stirring time being selected such that the conversion, relative to the mixture of monomers or vinyl chloride, is not more than 10 % by weight, after which the polymerization is brought to a polymerization temperature of 35 to 75°C by further heating and the polymerization is continued up to a vinyl chloride conversion of 65 to 95 %.

2. A thermoplastic, material according to claim 1, characterized in that the polymer of the aromatic vinyl monomer has a glass transition temperature of greater than 25°C and the polymer of the alkyl acrylate of the shell has a glass transition temperature of less than -20°C.

3. A thermoplastic material according to claim 1, characterized in that as crosslinking components compounds having at least two non-conjugated double bonds are added in amounts of 0.1 to 7 % by weight each, relative to the monomer to be crosslinked.

**Revendications**

1. Procédé de préparation de masses thermoplastiques destinées à la fabrication de corps moulés présentant une amélioration de la résistance au choc, de la transparence, du brillant de surface et de la résistance aux intempéries, à partir d'un noyau interne dur en polystyrène réticulé, d'une couche médiane en ester polyacrylique présentant l'élasticité du caoutchouc et d'une couche externe en chlorure de polyvinyle, caractérisé par le fait qu'à

I) 50 à 2 parties en poids d'un polymère noyau/enveloppe sous forme de latex, préparé par polymérisation en émulsion en présence d'initiateurs solubles dans l'eau ou d'initiateurs solubles dans les huiles, tandis que

a) avant ou après l'addition de l'initiateur, dans les conditions de polymérisation, en présence d'un émulsifiant, on place préalablement de 0,01 à 5,0% en poids d'un mélange d'un acrylate ou méthacrylate d'alkyle avec un composant de réticulation et qu'ensuite on ajoute, par portions ou en continu,

b) 20 à 70% d'un mélange d'un monomère aromatique du vinyle avec un composant de réticulation et simultanément avec, en courant distinct, une solution aqueuse d'un complexant organique ou d'un émulsifiant, et éventuellement une solution d'un catalyseur, et qu'on polymérise à fond et que l'on ajoute à ce polymère, par portions ou en continu

c) 79,99 à 25% en poids d'une mélange d'un acrylate d'alkyle avec un composant de réticulation et simultanément avec une solution aqueuse d'émulsifiant dans des conditions de polymérisation telles que la quantité d'émulsifiant soit de 0,20 à 5,0% en poids, relativement à la phase organique, et que la formation de particules soit efficacement empêchée au cours de la polymérisation, et que l'on ajoute

II) 50 à 98 parties en poids de chlorure de vinyle ou d'un mélange de monomères renfermant surtout du chlorure de vinyle et qu'à une température de 20 à 50°C, on agite pendant une demi-heure à 2 heures en présence d'un initiateur, la température et le temps d'agitation étant à choisir pour que la conversion, relativement au mélange de monomères ou au chlorure de vinyle, soit au plus de 10% en poids, après quoi, en continuant à chauffer à une température de polymérisation de 35 à 75°C, on poursuit la polymérisation jusqu'à avoir une conversion du chlorure de vinyle de 65 à 95%.

2. Masse thermoplastique selon la revendication 1, caractérisée par le fait que le polymère du monomère aromatique du vinyle présente une température de transition vitreuse supérieure à 25°C et que le polymère de l'acrylate d'alkyle formant l'enveloppe possède une température de transition vitreuse inférieure à –20°C.

3. Masse thermoplastique selon la revendication 1, caractérisée par le fait que, comme composants de réticulation, on ajoute des composés comportant au moins 2 doubles liaisons non-conjuguées, ce dans des quantités atteignant chaque fois 0,1 à 7% en poids, relativement au monomère à réticuleur.